Europäisches Patentamt

European Patent Office

Office européen des brevets

(11) Publication number: **0 177 224**
**B1**

(12) EUROPEAN PATENT SPECIFICATION

(45) Date of publication of patent specification: **16.05.90**

(51) Int. Cl.⁵: **G 11 B 19/20, G 11 B 19/28**

(21) Application number: **85306645.4**

(22) Date of filing: **18.09.85**

(54) Disc drives.

(30) Priority: **22.09.84 JP 199269/84**

(43) Date of publication of application:
**09.04.86 Bulletin 86/15**

(45) Publication of the grant of the patent:
**16.05.90 Bulletin 90/20**

(84) Designated Contracting States:
**AT DE FR GB NL**

(56) References cited:
**EP-A-0 111 217**
**DE-A-3 507 621**
**GB-A-2 082 371**

**PATENT ABSTRACTS OF JAPAN, vol. 7, no. 282
(P-243)1427r, 16th December 1983; & JP - A - 58
158 075**

(73) Proprietor: **SONY CORPORATION
7-35 Kitashinagawa 6-Chome Shinagawa-ku
Tokyo 141 (JP)**

(72) Inventor: **Saito, Kengo Patents Division
Sony Corporation 6-7-35 Kitashinagawa
Shinagawa-ku Tokyo 141 (JP)**
Inventor: **Ohtsu, Yasunori Patents Division
Sony Corporation 6-7-35 Kitashinagawa
Shinagawa-ku Tokyo 141 (JP)**
Inventor: **Akahira, Isao Patents Division
Sony Corporation 6-7-35 Kitashinagawa
Shinagawa-ku Tokyo 141 (JP)**
Inventor: **Inoue, Makoto Patents Division
Sony Corporation 6-7-35 Kitashinagawa
Shinagawa-ku Tokyo 141 (JP)**

(74) Representative: **Thomas, Christopher Hugo
et al
D Young & Co 10 Staple Inn
London WC1V 7RD (GB)**

## Description

This invention relates to disc drives. More particularly, but not exclusively, the invention relates to disc drives suitable for driving a microfloppy disc housed in a disc cassette.

Hitherto, various kinds of disc drive have been proposed and put into practical use. Some of them are of a type which drives a disc housed in a disc cassette. However, some drives of this type have suffered from the drawback that, during operation, the centring of the disc relative to the turntable on which the disc rests is disrupted, causing tracking error of the read/write heads. GB—A—2 082 371 provides an example of a disc drive comprising the features included in the preamble of Claim 1.

According to the present invention there is provided a disc drive comprising:

a turntable having concentrically and eccentrically located pins which are, upon setting a disc onto said turntable, inserted respectively into concentrically and eccentrically located holes in said disc, the eccentrically located pin being, upon rotation of said turntable, brought into contact with the forward edge of the eccentrically located hole, thus achieving a drive connection between said turntable and said disc;

biasing means for biasing said eccentrically located pin radially outward against the outer edge of the eccentrically located hole thus centring said disc on said turntable;

an electric motor for driving said turntable upon energisation thereof; and an electric circuit for energising said electric motor so as to drive said turntable at a predetermined constant speed; characterised in that:

said electric circuit is constructed so as to hold the rotational speed of said electric motor and thus the speed of said turntable to a level considerably lower than said predetermined speed for a given short period of time after starting to rotate said turntable.

The invention will now be described by way of example with reference to the accompanying drawings, throughout which like parts are referred to by like references, and in which:

Figure 1 is a block diagram of a control circuit for a disc drive according to the invention;

Figure 2 is a perspective view of a turntable of the disc drive according to the invention onto which a disc cassette has been placed for use;

Figure 3 is a cross-sectional view through part of the disc drive according to the invention and a disc cassette;

Figure 4 is a plan view of part of the disc drive and the disc cassette; and

Figure 5 is a graph of the friction characteristics of three commercially available floppy discs when used in a previously proposed disc drive.

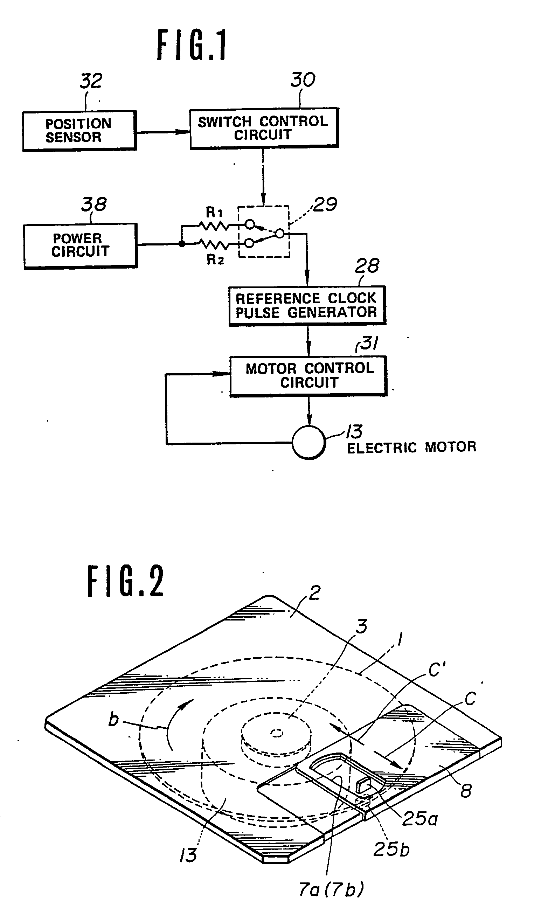

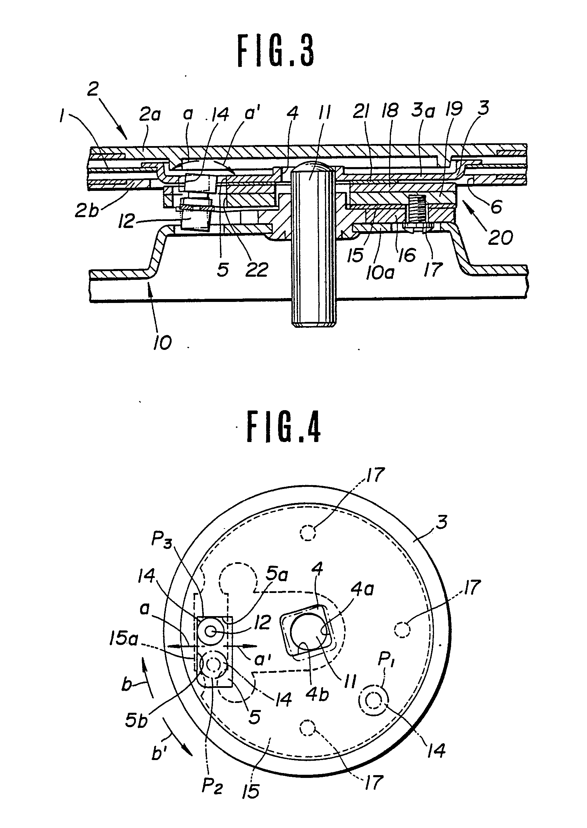

Figures 2 to 4 show an embodiment of the disc drive for driving a microfloppy disc 1. The disc 1 is of the double-sided type and is rotatably housed within a rigid disc cassette 2 which comprises square upper and lower halves 2a and 2b. As can be seen in Figure 3, the central exposed portion of the disc 1 has a circular metal plate 3 secured thereto. The circular metal plate 3 has a centre hole 4 and a drive pin engaging hole 5 spaced from the centre hole 4. As is shown in Figure 4, the centre hole 4 is square in shape, while the engaging hole 5 is rectangular. As is shown in Figure 3, the lower half 2b of the cassette 2 has a circular opening 6 into which a deck 3a of the circular metal plate 3 projects with some annular clearance left therebetween. The upper and lower halves 2a and 2b of the cassette 2 have matching elongated apertures 7a and 7b. Upon operation of the drive, read/write heads 25a and 25b (see Figure 2) of known form are inserted into the apertures 7a and 7b and contact opposite faces of the disc 1. The apertures 7a and 7b can be covered by a shutter 8 which is biased in the direction of covering the apertures 7a and 7b.

Referring back to Figure 3, a turntable 10 of the disc drive is shown with the cassette 2 in place. The turntable 10 has a raised circular deck 10a which is concentric with the major portion of the turntable 10. A centre shaft 11 is coaxially secured to the deck 10a through an annular connector. As will become clear hereinafter, a drive pin 12 is pivotably connected to the deck 10a at a point spaced from the centre of the deck 10a.

The centre shaft 11 is part of the drive shaft of an electric motor 13, thus providing a so-called direct-drive connection between the turntable 10 and the motor 13. A rotatable ring 14 which is free to rotate about the axis of the drive pin 12, is mounted on the upper end of the drive pin 12.

A circular spring plate 15 is used to retain the drive pin 12 on the deck 10a of the turntable 10. The spring plate 15 is secured by means of a plurality of bolts 17 to the deck 10a via a spacer 16. As is shown in Figures 3 and 4, the centre of the drive pin 12 is secured to a so-called bridge structure 15a of the spring plate 15, so that the drive pin 12 is free to pivot about a horizontal, non-radial axis. When at rest, the drive pin 12 stands with its axis parallel to the axis of the centre shaft 11. Due to the resiliency of the bridge structure 15a of the spring plate 15, the drive pin 12 is free to swing radially, that is, in the directions indicated by the arrows "a" and "a'" in Figure 4.

A magnetic chuck 20 is also secured to the spring plate 15 by the bolts 17. The magnetic chuck 20 comprises a yoke plate 19 and a magnetic plate 18. A lubricant sheet 21 made of a nonmagnetic material is attached to the magnetic plate 18. As shown in Figure 3, the magnetic chuck 20 has an aperture 22 through which the top (that is, the portion about which rotable ring 14 is disposed) of the drive pin 12 protrudes upwards as viewed in the drawing.

When the cassette 2 is to be inserted into the drive disc, the cassette 2 is put on the turntable 10 with the shutter 8 opened. At first, the centre shaft 11 of the turntable 10 is inserted into the centre hole 4 of the disc 1 while the drive pin 12 lies at some random location about the centre shaft 11, for example, at the position P1 in Figure 4. Under these conditions, the drive pin 12 is forced to pivot towards the horizontal with its head in contact with the lower surface of the circular metal plate 3 of the disc 1. Thereafter, the read/write heads 25a and 25b of the drive move into the apertures 7a and 7b of the cassette 2 and contact the surfaces of the disc 1. By the provision of the magnetic chuck 20, the setting of the circular metal plate 3 and thus of the entire disc 1 onto the turntable 10 is tightly achieved.

The turntable 10 is then driven to rotate at 600 rpm in the direction of the arrow "b" by energising the electric motor 13. The upper half of the drive pin 12 slides along the lower surface of the circular metal plate 3 of the disc 1 and slips into the engaging hole 5. The position of the drive pin 12 which has just slipped into the engaging hole 5 is indicated by reference P2 in Figure 4. As the turntable 10 continues to turn, the drive pin 12 moves to a driving position P3 where it contacts both the forward and outward edges 5a and 5b of the engaging hole 5 of the circular metal plate 3, thereby urging the disc 1 to turn in the same direction as the turntable 10. In this driving position, adjacent sides 4a and 4b of the square central hole 4 of the disc 1 are held in contact with the centre shaft 11, thereby centring the disc 1 on the turntable 10. As the disc 1 turns, the read/write heads 25a and 25b of the associated disc slide radially outwards and inwards (that is, in the directions of the arrows "c" and "c'" in Figure 2) along the apertures 7a and 7b so as to read and/or write data on the disc 1.

However, disc drives of the type described above may suffer drawbacks originating from the significant force of impact when the drive pin 12 is brought into contact with the forward edge 5a of the engaging hole 5. That is, when, after slipping into the engaging hole 5, the drive pin 12 comes into contact with or abuts the forward edge 5a of the hole 5, the disc 1 tends to slip across the turntable 10 in the forward direction (that is in the direction of the arrow "b" in Figure 4). This slippage tends to pull the edges 4a or 4b of the square central hole 4 of the disc 1 away from the centre shaft 11 of the turntable 10, thereby preventing the disc 1 from being centred on the turntable 10. This miscentring sometimes brings about tracking errors of the read/write heads 25a and 25b of the disc drive.

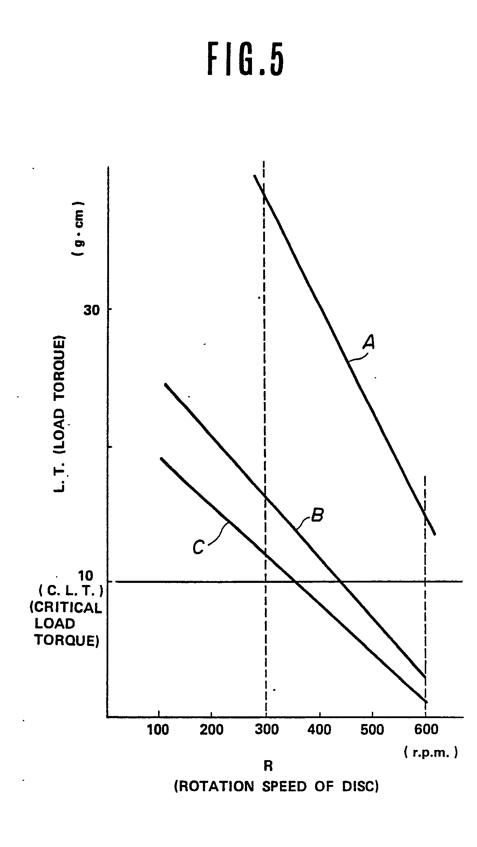

Several experiments have been carried out to find a solution to the disc slippage encountered in the disc drive described above. The results of one experiment are shown in Figure 5, which plots the characteristics of three commercially available discs A, B and C with different coefficients of friction in terms of the relationship between the rotational speed (R) of the disc and the load torque (L.T) applied thereto. The load torque represents the sum of the frictional forces between the disc and the two heads 25a and 25b, and the frictional force between the disc and the inner surfaces of the disc cassette. As can be understood from this graph, the load torque applied to the disc decreases as the rotational speed of the disc increases. When, for example, the rotational speed of the disc is about 300 rpm, all the discs A, B and C satisfy the critical load torque (C.L.T: 10 g.cm) which prevents the undesirable slippage of the disc on the turntable, while, when the rotational speed of the disc is about 600 rpm, the discs B and C fail to satisfy the critical value of 10 g.cm. Thus, it is believed that if the drive pin 12 of the turntable 10 collides with the forward edge 5a of the engaging hole 5 of the disc 1 at a speed lower than 300 rpm, the undesirable slippage of the disc 1 will not occur.

As will become clear as this description proceeds, in the present embodiment, the disc drive is controlled in such a manner that as the turntable 10 starts to rotate, its speed is held to a lower level to prevent slippage of the disc 1 on the turntable 10 and thereafter the speed is increased to a normal, higher level to allow normal use of the disc 1.

Figure 1 shows a control circuit for the disc drive and according to the present invention. The control circuit comprises a reference clock pulse generator 28 to which is connected a power circuit 33 through a switch 29. The switch 29 is connected to parallel-connected resistors R1 and R2 (R1 is less than R2) so as to change, by switching between the resistors R1 and R2, the reference voltage applied to the pulse generator 28. The switching operation of the switch 29 is effected by a control signal supplied by a switch control circuit 30. The reference clock pulse generator 28 is connected to a motor control circuit 31 by which the electric motor 13 (which drives the turntable 10 directly) is controlled. The switch 29 selects one of two frequencies for the reference clock pulses fed to the motor control circuit 31, and thus selects one of two rotational speeds for the electric motor 13.

When the switch 29 assumes its second position in which it connects the higher-resistance resistor R2 (that is, the position indicated by a solid switch arm), the frequency of the pulses sent to the motor control circuit 31 is increased thus increasing the rotational speed of the electric motor 13, for example, to 600 rpm, which is the normal speed of the disc drive. On the other hand, when the switch 29 is in its first position in which it connects in the lower-resistance resistor R1 (that is, the position indicated by a dotted switch arm), the frequency of the pulses is reduced, so that the rotational speed of the motor 13 is lower, for example, about 200 rpm to 300 rpm, preferably around 250 rpm.

When the disc 1 in the cassette 2 is initially set on the turntable 10 of the disc drive in the manner described above, a conventional sensor 32 supplies a signal indicating the presence of the disc 1. Upon receiving this signal, the switch control circuit 30 actuates the switch 29 to its first position. Thus, the electric motor 13 (and so the turntable 10) starts to rotate at the lower speed, for example, 250 rpm. After a given period of time (for example, longer than 200 milliseconds), a timer means in the switch control circuit 30 causes the switch 29 to assume its second position. It is to be noted that during this short period, the drive pin 12 must engage the forward edge 5a of the engaging hole 5 of the disc 1, and for the reasons given above, the collision does not induce undesirable slippage of the disc 1 on the turntable 10. When the switch 29 assumes the second position, the rotational speed of the turntable 10 changes to the higher level, for example 600 rpm, and thereafter this rotational speed remains constant during operation of the disc drive.

As can be understood from the above description, undesirable slippage of the disc 1 on the turntable 10 is prevented by the provision of the initial stage of rotation of the disc drive during which the rotational speed of the turntable 10 is held to a relatively low level. Thus, tracking error of the read/write heads 25a and 25b is prevented or at least reduced.

## Claims

1. A disc drive comprising:
a turntable (10) having concentrically and eccentrically located pins (11, 12) which are, upon setting a disc (1) onto said turntable (10), inserted respectively into concentrically and eccentrically located holes (4, 5) in said disc (1), the eccentrically located pin (12) being upon rotation of said turntable (10), brought into contact with the forward edge (5a) of the eccentrically located hole (5), thus achieving a drive connection between said turntable (1) and said disc (1);
biasing means (15) for biasing said eccentrically located pin (12) radially outward against the outer edge (5b) of the eccentrically located hole (5) thus centring said disc (1) on said turntable (10);
an electric motor (13) for driving said turntable (10) upon energisation thereof; and
an electric circuit (28) for energising said electric motor (13) so as to drive said turntable (10) at a predetermined constant speed; characterised in that:
said electric circuit (28, 29) is constructed so as to hold the rotational speed of said electric motor (13) and thus the speed of said turntable (10) to a level considerably lower than said predetermined speed for a given short period of time after starting to rotate said turntable (10).

2. A disc drive according to claim 1 wherein said electric circuit (28, 29) holds the speed of said turntable (10) to a level below approximately 300 rpm, and thereafter increased the speed of the turntable (10) to approximately 600 rpm.

3. A disc drive according to claim 2 wherein said given short period of time is longer than approximately 200 milliseconds.

4. A disc drive according to claim 3 wherein said electric circuit (28, 29) comprises a reference clock pulse generator (28) connected to a power supply circuit (38) by way of a switch (29) which switches between higher and lower-resistance resistors (R2, R1) connected in parallel with said switch (29), a switch control circuit (30) which supplies a signal for actuating said switch (29), and a motor control circuit (31) by which the electric motor (13) is directly controlled, said electric circuit (28, 29) being so arranged that when said switch (29) is actuated to connect said higher-resistance resistor (R2), the frequency of pulses supplied from said pulse generator (28) to the motor control circuit (31) is increased, thereby controlling the rotational speed of the electric motor (13) to a higher level, while, when the switch (29) is actuated so as to connect said lower-resistance resistor (R1), the frequency of the pulses supplied to the motor control circuit (31) is decreased, thereby controlling the rotational speed of the electric motor (13) to a lower level.

## Patentansprüche

1. Plattenantrieb mit einem Plattenteller (10) mit konzentrisch und exzentrisch angeordneten Stiften (11, 12), die beim Auflegen einer Platte (1) auf den Plattenteller (10) in konzentrisch bzw. exzentrisch angeordnete Löcher (5, 6) der Platte (1) eingeführt werden, wobei der exzentrisch angeordnete Stift (12) beim Drehen des Plattentellers (10) mit der Vorderkante (5a) des exzentrisch angeordneten Lochs (5) in Kontakt gebracht und damit eine Antriebsverbindung zwischen dem Plattenteller (10) und der Platte (1) hergestellt wird,
mit Vorspannmitteln (15) zum Vorspannen des exzentrisch angeordneten Stifts (12) radial nach außen gegen die Außenkante (5b) des exzentrisch angeordneten Lochs (5) und somit zum Zentrieren der Platte (1) auf dem Plattenteller (10), mit einem Elektromotor (13), der bei seiner Erregung den Plattenteller (10) antreibt,
sowie mit einer elektrischen Schaltung (28) zur Erregung des Elektromotors (13), derart, daß dieser den Plattenteller (10) mit einer vorbestimmten konstanten Drehzahl antreibt, dadurch gekennzeichnet,
daß die elektrische Schaltung (28, 29) so ausgebildet ist, daß sie die Drehzahl des Elektromotors (13) und damit die Geschwindigkeit des Plattentellers (10) während einer gegebenen kurzen Zeitspanne nach dem Beginn des Drehens des Plattentellers (10) auf einem Wert hält, der erheblich kleiner ist als die genannte vorbestimmte Drehzahl.

2. Plattenantrieb nach Anspruch 1, bei dem die elektrische Schaltung (28, 29) die Drehzahl des Plattentellers (10) auf einem Wert hält, der kleiner ist als etwa 300 Umdrehungen/Minute, und anschließend die Drehzahl des Plattentellers (10) auf etwa 600 Umdrehungen/Minute erhöht.

3. Plattenantrieb nach Anspruch 2, bei dem die genannte kurze Zeitspanne größer ist als etwa 200 Millisekunden.

4. Plattenantrieb nach Anspruch 3, bei dem die elektrische Schaltung (28, 29) folgende Teile aufweist:
einen Referenztakt-Impulsgenerator (28), der über einen Schalter (29) mit einer Stromversorgungsschaltung (38) verbunden ist, wobei dieser Schalter (29) zwischen Widerständen (R2, R1) mit höherem bzw. niedrigerem Widerstandswert umschaltbar ist, die parallel zu ihm angeordnet sind, eine Schaltersteuerschaltung (30), die ein Signal zur Betätigung des Schalters (29) liefert, und eine Motorsteuerschaltung (31) zur direkten Steuerung des Elektromotors (13),

wobei die elektrische Schaltung (28, 29) in der Weise angeordnet ist, daß

die Frequenz der von dem Impulsgenerator (28) an die Motorsteuerschaltung (31) gelieferten Impulse erhöht und dadurch die Drehzahl des Elektromotors (13) auf einen höheren Wert gebracht wird, wenn der Schalter (29) so betätigt wird, daß er den Widerstand (R2) mit dem höheren Widerstandswert zuschaltet,

während die Frequenz der von dem Impulsgenerator (28) an die Motorsteuerschaltung (31) gelieferten Impulse erniedrigt und dadurch die Drehzahl des Elektromotors (13) auf einen niedrigeren Wert gebracht wird, wenn der Schalter (29) so betätigt wird, daß er den Widerstand (R1) mit dem niedrigeren Widerstandswert zuschaltet.

**Revendications**

1. Mécanisme d'entraînement de disquette, comportant:

un plateau tournant (10) équipé de broches (11, 12) qui sont situées concentriquement et excentriquement et qui, lorsque l'on pose une disquette (1) sur ledit plateau tournant (10), s'insèrent respectivement dans des trous (4, 5) situés concentriquement et excentriquement dans ladite disquette (1), la broche (12) située excentriquement étant, lors de la rotation dudit plateau tournant (10), mise en contact avec le bord avant (5a) du trou (5) situé excentriquement, réalisant ainsi une liaison d'entraînement entre ledit plateau tournant (1) et ladite disquette (1);

des moyens de contrainte (15) pour contraindre ladite broche (12), située excentriquement, radialement vers l'extérieur contre le bord extérieur (5b) du trou (5) situé excentriquement, centrant ainsi ladite disquette (1) sur ledit plateau tournant (10);

un moteur électrique (13) pour entraîner ledit plateau tournant (10) lors de sa mise sous tension; et

un circuit électrique (28) pour mettre sous tension ledit moteur électrique (2) de façon à entraîner ledit plateau tournant (10) à une vitesse constante prédéterminée; caractérisé en ce que:

ledit circuit électrique (28, 29) est construit de façon à maintenir la vitesse de rotation dudit moteur électrique (13), et donc la vitesse dudit plateau tournant (10), à une valeur considérablement inférieure à ladite vitesse prédéterminée pendant une courte période de temps après le démarrage du moteur pour entraîner ledit plateau tournant (10).

2. Mécanisme d'entraînement de disquette selon la revendication 1, dans lequel ledit circuit électrique (28, 29) maintient la vitesse dudit plateau tournant (10) à une valeur basse d'environ 300 tpm, puis augmente la vitesse du plateau tournant (10) jusqu'à environ 600 tpm.

3. Mécanisme d'entraînement de disquette selon la revendication 2, dans lequel ladite courte période de temps est supérieure à environ 200 millisecondes.

4. Mécanisme d'entraînement de disquette selon la revendication 3, dans lequel ledit circuit électrique (28, 29) comporte un générateur (28) d'impulsions d'horloge de référence relié à un circuit d'alimentation puissance (38) par l'intermédiaire d'un sélecteur (29) qui sélectionne entre une résistance d'une valeur plus élevée et une résistance de valeur plus faible (R2, R1) reliées en parallèle avec ledit sélecteur (22), un circuit (30) de commande du sélecteur qui envoie un signal pour manoeuvrer ledit sélecteur (29), et un circuit (31) de commande du moteur par lequel le moteur électrique (7) est directement commandé, ledit circuit électrique (28, 29) étant conçu de façon que, lorsque ledit sélecteur (29) est manoeuvré pour relier ladite résistance de valeur plus élevée (R2), la fréquence des impulsions fournies par ledit générateur d'impulsions (28) au circuit (31) de commande du moteur augmente, ce qui commande au moteur électrique (13) de prendre une vitesse de rotation d'une valeur élevée, tandis que, lorsque le sélecteur (29) est manoeuvré de façon à relier ladite résistance de valeur plus faible (R1), la fréquence des impulsions fournies au circuit (31) de commande du moteur diminue, ce qui commande au moteur électrique (13) de prendre une vitesse de rotation d'une valeur plus faible.

# FIG.1

32 POSITION SENSOR → 30 SWITCH CONTROL CIRCUIT

38 POWER CIRCUIT

R₁
R₂
29

28 REFERENCE CLOCK PULSE GENERATOR

31 MOTOR CONTROL CIRCUIT

13 ELECTRIC MOTOR

# FIG.2

2
3
1
C'
C
b
8
25a
25b
13
7a (7b)

1

# FIG.3

# FIG.4

# FIG.5

L.T. (LOAD TORQUE) (g·cm)

30

A

B

C

10
(C. L. T.)
(CRITICAL
LOAD
TORQUE)

100 200 300 400 500 600

(r.p.m.)

R
(ROTATION SPEED OF DISC)